# EUROPEAN PATENT APPLICATION

(11) **EP 4 787 472 A1**
(43) Date of publication of application: **05.08.2026**
(21) Application number: 25155698.1
(22) Date of filing: 04.02.2025
(51) Int. Cl.: H01M 4/36, H01M 4/62, H01M 10/0525

(54) **MICROCAPSULES CONTAINING ADDITIONAL LITHIUM SALT FOR LIBS**

(71) Applicant: Kemijski Institut, 1000 Ljubljana (SI)
(72) Inventor: DOMINKO, Robert, 1001 Ljubljana (SI); PAL, Bhupander, 1001 Ljubljana (SI); JURECIC, Luka, 1001 Ljubljana (SI)
(74) Representative: Weickmann & Weickmann PartmbB

(57) **Abstract**

Microcapsules containing additional lithium salts for Lithium-ion batteries (LIBs) are presented here. The microcapsules are comprised of outer hollow shell such as porous SiOz and inner core of a lithium salt such as lithium squarate. Further, processes of preparing the microcapsules are provided.

## Description

Microcapsules containing additional lithium salts for Lithium-ion batteries (LIBs) are presented here. The microcapsules are comprised of outer hollow shell such as porous SiOz and inner core of a lithium salt such as lithium squarate (Li₂C₄O₄). Further, processes of preparing the microcapsules are provided.

In LIBs, it is extremely necessary to retain a longer life cycle that delivers nonstop lithium ion intercalation and de-intercalation. At the time of intercalation and de-intercalation processes, there are very prominent volume changes in the electrode materials, which leads to continuous re-formation of the solid electrolyte interphase (SEI) and consumption of active lithium (up to 70% consumption in first few cycles) ions. Therefore, it is very important to have additional lithium ions source which can fulfil the requirement of loss of active lithium ions in LIB full-cells and improve their life span.

### DESCRIPTION OF INVENTION

In this work, microcapsules containing lithium salt (such as Li₂C₄O₄) is investigated for the first time as an extra lithium source for the cathode in lithium metal battery cells and in LIB cells with a graphite based negative electrode. Although concept of microcapsules is very old term in medical and cosmetic fields but in case of energy storage application it can be revolution.

Thus, the present invention provides a microcapsule comprising.
(i) an outer shell comprising or consisting of one or more inorganic or organic materials, and
(ii) an inner core comprising or consisting of one or more organic or inorganic lithium salts.

As synthesized microcapsules are air stable, cost-effective and compatible with standard industrial electrode formulation processing protocol.

The material of the outer shell (i) can be selected from SiO₂, carbon, polypyrrole and polyaniline, reverse micelles and combinations thereof. More preferably, it comprises or consists of SiO₂.

The inner core (ii) preferably comprises or consists of a lithium salt selected from Li₂C₄O₄, Li₂S, Li₃S LiNO₃, Li₃N, Li₂MoO₃, Li₅FeO₄, Li₂NiO₂ and combinations thereof. More preferably, the lithium salt is Li₂C₄O₄.

In a particularly preferred embodiment of the invention, the outer shell comprises or consists of porous SiO₂, polypyrrole, polyaniline, or carbon, and the core comprises or consists of Li₂C₄O₄, Li₂S, or LiNO₃. Most preferred microcapsules comprise an outer shell comprising or consisting of SiOz and a core comprising or consisting of Li₂C₄O₄.

The amount of lithium salt in a microcapsule may be in a range of 1-25 wt% based on the total weight of the microcapsule, more preferably 10-15 wt%.

Another aspect of the invention is an electrode, comprising the microcapsule described above. Particularly advantageous is the use of the microcapsules according to the invention in electrodes for LIBs where they serve as an additional source of lithium ions.

Still another aspect of the invention is a lithium-ion battery comprising the above electrode of the invention. Preferably, the electrode of the invention serves as a cathode. In a lithium ion battery, the microcapsule of the invention included in the electrode serves as an additional source of lithium ions for the electrode which can compensate for the loss of active lithium ions in LIB full-cells and improve their life span. An increase in cycle life of NMC622+Li₂C₄O₄@porous SiO₂ ∥ graphite full-cells is reported, which grows linearly with the initial amount of lithium salt due to extra Li⁺ ions but decrease at higher amount due to parasitic reactions.

Further, the invention provides a method for preparing the microcapsule of the invention, comprising the steps
(i) providing a material to be encapsulated comprising or consisting of one or more organic or inorganic lithium salts,
(ii) preparing a hollow porous shell comprising or consisting of one or more inorganic or organic materials, preferably selected from SiOz, carbon, polypyrrole and polyaniline, reverse micelles and combinations thereof, more preferably comprising of consisting of SiO₂, and
(iii) encapsulating the material of (i) inside the hollow porous shell,
wherein steps (ii) and (iii) can be carried out simultaneously or sequentially.

Steps (ii) and (iii) can be carried out simultaneously or successively. That is, it is possible to introduce the material to be encapsulated through a hollow porous shell or the shell can be formed directly around a material to be encapsulated.

The material of the hollow porous shell prepared in step (ii) can be selected from SiO₂, carbon, polypyrrole and polyaniline, reverse micelles and combinations thereof. More preferably, it comprises or consists of SiO₂.

According to a preferred embodiment, wherein the shell comprises or consists of SiO₂, step (ii) of preparing the hollow porous SiOz shell comprises adding tetraethyl orthosilicate (TEOS) to a solution comprising sodium polyacrylate, ammonia and EtOH and isolating the hollow porous SiO₂ shell.

The material to be encapsulated is preferably selected from Li₂C₄O₄, Li₂S, Li₃S LiNO₃, Li₃N, Li₂MoO₃, Li₅FeO₄, Li₂NiO₂ and combinations thereof. More preferably, the material comprises or consists of Li₂C₄O₄.

In a preferred embodiment wherein the material to be encapsulated is Li₂C₄O₄, step (i) comprises synthesizing lithium squarate by a method comprising reacting squaric acid and lithium carbonate, preferably in a mixture of water and ethanol, and isolating lithium squarate.

Encapsulating Li₂C₄O₄ inside the hollow porous SiO₂ shell can be accomplished by contacting the hollow porous SiOz shell obtained from step (ii), preferably as a dry powder, with an aqueous solution of Li₂C₄O₄ to yield impregnation of Li₂C₄O₄ inside the porous SiO₂ shell. Subsequently, the resulting microcapsule is dried, preferably by vacuum drying.

In an alternative embodiment, steps (ii) and (iii) are carried out simultaneously, preferably by *in-situ* hydrolysis and condensation of TEOS on an organic lithium salt. In this procedure, the shell is formed directly around the material to be encapsulated.

Step (ii) may comprise a miniemulsion polymerization process.

In a preferred embodiment, steps (ii) and (iii) are carried out simultaneously and comprise a miniemulsion polymerization process of one or more organic materials, in particular polyaniline, or polypyrrole on a lithium salt to be encapsulated.

A further aspect of the invention is the use of the microcapsule of the invention as an additive in the preparation of an electrode, in particular a cathode of a lithium-ion battery.

A still further aspect of the invention is a method for preparing the electrode of the invention, comprising a step of providing a slurry comprising electrode materials and the microcapsule of the invention, and preparing an electrode from the slurry. The electrode materials are those that are commonly used for the manufacture of electrodes in the technical field. They may vary depending on the intended use of the electrode. Suitable manufacturing processes for electrodes and corresponding materials are known to the skilled person; the special feature of the production according to the invention is the use of the novel microcapsules as an additive.

The invention will be further described by the following Figures and Examples which are not meant to limit the scope of the invention defined by the appended claims.

### FIGURES

- **Fig. 1**: Powder X-ray diffraction (XRD) patterns for as-synthesized materials porous SiO₂, Li₂C₄O₄, and microcapsules (Li₂C₄O₄@porous SiO₂). A single broad peak at about 23° indicates the amorphous nature of SiO₂, main peaks in Li₂C₄O₄ represents its monoclinic phase and crystalline nature, the microcapsules displayed the combination of both SiO₂ and Li₂C₄O₄ XRD patterns.
- **Fig. 2**: FT-IR spectrum for as-synthesized materials porous SiO₂, Li₂C₄O₄, and microcapsules (Li₂C₄O₄@porous SiO₂)
- **Fig. 3**: SEM and TEM images confirm the hollow porous shell of SiO₂ and presence of Li₂C₄O₄ inside it.
- **Fig. 4**: Electrochemical evaluation of the influence of different amounts of microcapsules (Li₂C₄O₄@porous SiO₂) with different amount of Li₂C₄O₄ within the cathode in NMC622+Li₂C₄O₄@porous SiO₂//graphite LIB cells.
- **Fig. 5**: General schematic illustration of electrodes and pouch cell's preparation.

### EXAMPLES

### Experimental details

**Materials:** Tetraethoxysilane (TEOS), Absolute Ethanol (EtOH), Ammonia solution (NH₄OH), Sodium Polyacrylate (C₃H₃NaO₂)ₙ, 3,4-dihydroxy-3-cyclobutene-1,2-dione (Squaric acid), Lithium Carbonate (Li₂CO₃), and de-ionized water.

**Synthesis of microcapsules (Li₂C₄O₄@SiO₂):** The synthesis of microcapsules has done in three steps. In step 1, synthesis of hollow porous SiOz shell have done by hydrolysis and condensation process of TEOS under the control of ammonia. In step 2, synthesis of lithium squarate (Li₂C₄O₄) have done by simple wet chemical method using squaric acid (3,4-dihydroxy-3-cyclobutene-1,2-dione) and lithium carbonate as an initial reaction precursor. In step 3, encapsulation of Li₂C₄O₄ inside the hollow porous SiO₂ shell have done by wet impregnation method as shown in scheme 1. The optimization of Li₂C₄O₄ inside hollow porous SiO₂ shell have been done by varying the percentage of Li₂C₄O₄ from 1-25 wt%. The products in all three steps have been characterized by FT-IR, XRD, SEM and TEM analysis. The details about synthesis processes and characterization is given below.
**1. Synthesis of Hollow Porous SiO₂ Shell:** The hollow porous SiOz shell is prepared at room temperature by making clear solution of 0.08 g of sodium polyacrylate in 1.5 ml of ammonia solution, then added 30 ml EtOH in it, which turned solution into turbid white. After 30 min, TEOS (0.75 ml) was added in the above solution (at time interval of 2h) under vigorous stirring. The white colloids were obtained after 12 hours continuous stirring. Finally, the hollow porous SiO2 shells were obtained by removing the sodium polyacrylate from white colloids by washing it several times with de-ionized water and dried at 80°C overnight.
**2. Synthesis of Lithium Squarate (Li₂C₄O₄):** The synthesis of lithium squarate (Li₂C₄O₄) has done by simple wet chemical method using squaric acid (3,4-dihydroxy-3-cyclobutene-1,2-dione) and lithium carbonate as an initial reaction precursor. Squaric acid and Li2CO3 were dissolved in de-ionized water and EtOH (1:1) at room temperature by continuous stirring for 4 h. Later, EtOH and de-ionized water was evaporated by rotary evaporator at 50°C. The resulting white powders were grinded with mortar pestle, then vacuum dried at 50°C overnight.
**3. Encapsulation of Li₂C₄O₄ inside the hollow porous SiO₂ shell (Li₂C₄O₄@SiO₂):** The microcapsules of Li₂C₄O₄@SiO₂ have synthesized by wet impregnation method as shown in scheme 1. The optimization of Li₂C₄O₄ inside hollow porous SiO₂ shell have been done by varying the percentage of Li₂C₄O₄ from 1-25 wt%. The microcapsules of Li2C4O4@porous SiO2 were prepared by making the solution of Li₂C₄O₄ in water, then added it on dry power of SiO2 dropwise until whole power become wet (1ml/1g of SiO₂ power), then leave it for almost 6 h to complete impregnation of Li₂C₄O₄ inside porous SiO₂ shell. The hydrate water was then removed by complete drying at 80°C overnight. The vacuum drying at 50°C was performed afterward to recrystallize the Li₂C₄O₄ inside the porous SiO₂ shell.

**Characterizations:** As synthesized materials were characterized for structure, compositional and morphological characterizations. The phase purity and function groups identification have done by power X-ray diffractometer and FT-IR techniques. Surface morphologies of the synthesized materials were investigated by scanning electron microscopy and transmission electron microscopy techniques.

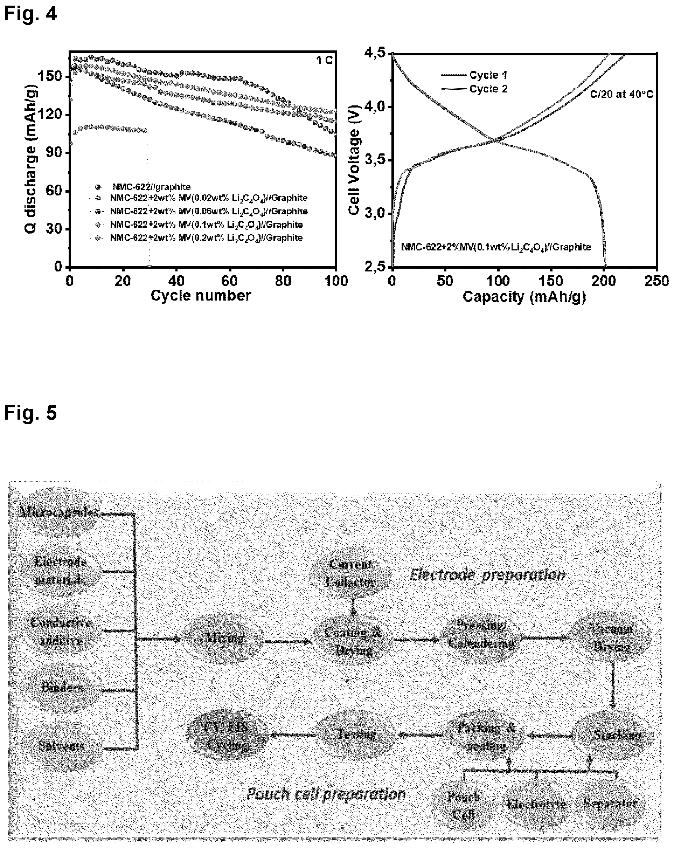

**Formulation of cathode composite with microcapsules:** The formulation of cathode composite with microcapsules have done by simple industrial standard slurry processing as shown in Figure 5. The influence of different amounts of Li₂C₄O₄ (1-25 wt%) and microcapsules (1-2 wt%) within the cathode was systematically evaluated in half and full pouch cell fabrications.

### Results and discussions

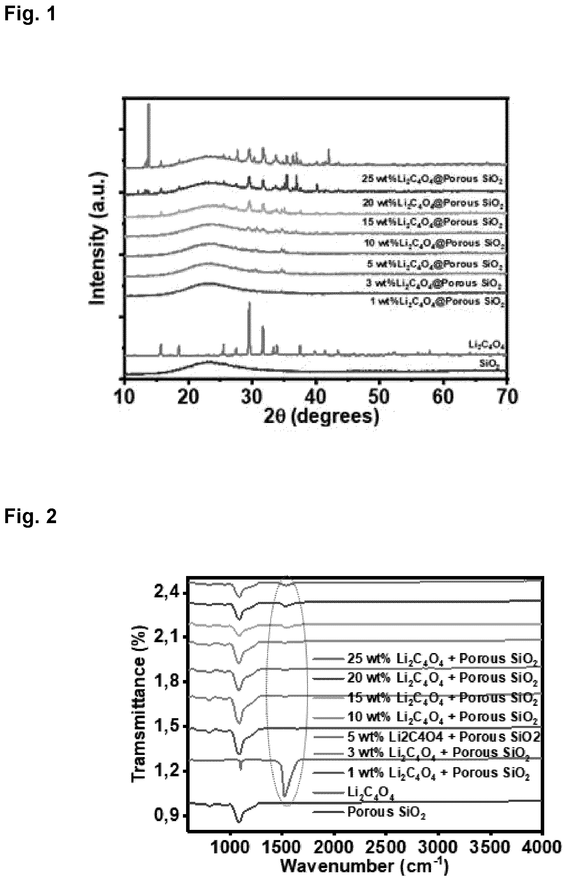

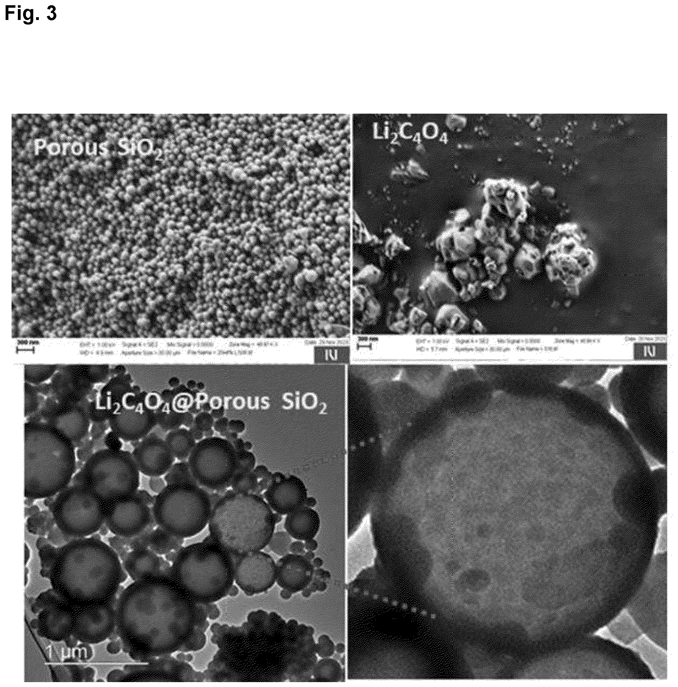

**Structural and morphological characterizations:** As synthesized materials were characterized by XRD, FT-IR, and SEM and TEM analysis for their structural, compositional and morphological identifications. The powder X-ray diffraction (XRD) patterns for as-synthesized materials shown in Figure 1 confirm the successful synthesis of porous SiO₂, Li₂C₄O₄, and microcapsules (Li₂C₄O₄@porous SiO₂). A single broad peak at about 23° indicates the amorphous nature of SiO₂, main peaks in Li₂C₄O₄ represents its monoclinic phase and crystalline nature, the microcapsules displayed the combination of both SiO₂ and Li₂C₄O₄ XRD patterns as shown in figure 1. All the main bands in FT-IR spectrum is attributed to SiO₂ and Li₂C₄O₄ as shown in figure 2. SEM and TEM images are shown in figure 3, TEM images confirm the hollow porous shell of SiO₂ and presence of Li₂C₄O₄ inside it.

**Electrochemical characterization:** Electrochemical investigations were conducted in two-electrode configuration pouch cells, assembled in glove box (0.1 ppm O₂ and H₂O). A Celgard 2500 membrane served as a separator and LP57 (1M LiPF6 in 3:7 vol% ethylene carbonate/ethyl methyl carbonate, EC/EMC) as electrolyte. At least two to three cells per sample were assembled to ensure reproducible results. The electrochemical investigations have been done for half and full cells (Li metal ∥ Li₂C₄O₄, Li metal ∥ Li₂C₄O₄@porous SiO₂, Li metal ∥ NMC622+Li₂C₄O₄@porous SiO₂, and graphite ∥ NMC622+Li₂C₄O₄@porous SiO₂ cells). The microcapsules (Li₂C₄O₄@porous SiO₂) were evaluated as additional lithium ion source for the positive electrode to compensate for active lithium losses due to SEI formation at anode surface. The microcapsule holds great promise as additive due to its compatibility with industrial standard processing of the NMC-based cathodes. The influence of different amounts of microcapsules (Li₂C₄O₄@porous SiO₂) with different amount of Li₂C₄O₄ within the cathode was systematically evaluated in NMC622+Li₂C₄O₄@porous SiO₂//graphite LIB cells. (Figure 4) The Li₂C₄O₄ in microcapsules was irreversibly oxidized in the first few charge cycles, increasing the attainable charge capacities and providing a surplus of active lithium within the cell. However, the discharge capacities were gradually decreased when increasing the amount of 223203QLi₂C₄O₄ in microcapsules.

## Claims

1. Microcapsule comprising.
(i) an outer shell comprising or consisting of one or more inorganic or organic materials, preferably selected from SiO₂, carbon, polypyrrole and polyaniline, reverse micelles and combinations thereof, more preferably comprising of consisting of SiO₂, and
(ii) an inner core comprising or consisting of one or more organic or inorganic lithium salts, preferably selected from Li₂C₄O₄, Li₂S, Li₃S LiNO₃, Li₃N, Li₂MoO₃, Li₅FeO₄, Li₂NiO₂ and combinations thereof, more preferably Li₂C₄O₄.

2. The microcapsule of claim 1, wherein the outer shell comprises or consists porous SiO₂, polypyrrole, polyaniline, or carbon, and the core comprises or consists of Li₂C₄O₄, Li₂S, or LiNO₃.

3. The microcapsule of claim 1 or 2, wherein the amount of the lithium salt is in a range of 1-25 wt% based on the total weight of the microcapsule, more preferably 10-15 wt%.

4. Electrode, comprising the microcapsule of any one of claims 1-3.

5. Lithium-ion battery comprising the electrode of claim 4, preferably as a cathode.

6. Method for preparing the microcapsule of any one of claims 1-3, comprising the steps
(i) providing a material to be encapsulated comprising or consisting of one or more organic or inorganic lithium salts preferably selected from Li₂C₄O₄, Li₂S, Li₃S LiNO₃, Li₃N, Li₂MoO₃, Li₅FeO₄, Li₂NiO₂ and combinations thereof, more preferably Li₂C₄O₄,
(ii) preparing a hollow porous shell comprising or consisting of one or more inorganic or organic materials, preferably selected from SiO₂, carbon, polypyrrole and polyaniline, reverse micelles and combinations thereof, more preferably comprising of consisting of SiO₂, and
(iii) encapsulating the material of (i) inside the hollow porous shell,
wherein steps (ii) and (iii) can be carried out simultaneously or sequentially.

7. The method of claim 6 for preparing a microcapsule, wherein the shell comprises or consists of SiO₂, wherein step (ii) of preparing the hollow porous SiOz shell comprises adding tetraethyl orthosilicate (TEOS) to a solution comprising sodium polyacrylate, ammonia and EtOH and isolating the hollow porous SiO₂ shell.

8. The method of claim 6 or 7, wherein the material to be encapsulated comprises or consists of Li₂C₄O₄, wherein step (i) comprises synthesizing lithium squarate by a method comprising reacting squaric acid and lithium carbonate, preferably in a mixture of water and ethanol, and isolating lithium squarate.

9. The method of any one of claim 7-8, wherein step (iii) comprises encapsulating Li₂C₄O₄ inside the hollow porous SiOz shell by contacting the hollow porous SiOz shell obtained from step (i), preferably as a dry powder, with an aqueous solution of Li₂C₄O₄ to yield impregnation of Li₂C₄O₄ inside the porous SiO₂ shell, and drying, preferably vacuum drying.

10. The method of claim 6, wherein steps (ii) and (iii) are carried out simultaneously, preferably by *in-situ* hydrolysis and condensation of TEOS on an organic lithium salt.

11. The method of any one of claims 6-10, wherein step (ii) comprises a miniemulsion polymerization process.

12. The method of any one of claims 6 and 10-11, wherein steps (ii) and (iii) are carried out simultaneously and comprise a miniemulsion polymerization process of one or more organic materials, in particular polyaniline, or polypyrrole on a lithium salt to be encapsulated.

13. Use of the microcapsule of any one of claims 1-3 as an additive in the preparation of an electrode, in particular a cathode of a lithium-ion battery.

14. Method for preparing the electrode of claim 4, comprising a step of providing a slurry comprising electrode materials and the microcapsule of any one of claims 1-3, and preparing an electrode from the slurry.
